(19) Europäisches Patentamt
European Patent Office
Office européen des brevets

(11) **EP 4 144 827 A1**

(12) **EUROPEAN PATENT APPLICATION**
published in accordance with Art. 153(4) EPC

(43) Date of publication:
**08.03.2023 Bulletin 2023/10**

(21) Application number: **21783122.1**

(22) Date of filing: **12.03.2021**

(51) International Patent Classification (IPC):
**C12M 1/00** (2006.01)       **C12M 1/42** (2006.01)
**C12M 1/36** (2006.01)

(52) Cooperative Patent Classification (CPC):
**C12M 1/00; C12M 1/34; C12M 1/36; C12M 1/38; C12M 1/42**

(86) International application number:
**PCT/CN2021/080428**

(87) International publication number:
**WO 2021/218443 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2020 CN 202010367897**

(71) Applicant: **BOE Technology Group Co., Ltd.**
**Beijing 100015 (CN)**

(72) Inventors:
• **HOU, Mengjun**
  **Beijing 100176 (CN)**
• **WU, Qiong**
  **Beijing 100176 (CN)**
• **WANG, Youxue**
  **Beijing 100176 (CN)**
• **GENG, Kai**
  **Beijing 100176 (CN)**
• **LIU, Zhukai**
  **Beijing 100176 (CN)**
• **YU, Jing**
  **Beijing 100176 (CN)**

(74) Representative: **Brötz, Helmut et al**
**Rieder & Partner mbB**
**Patentanwälte - Rechtsanwalt**
**Yale-Allee 26**
**42329 Wuppertal (DE)**

(54) **ANALYSIS APPARATUS FOR TEST CHIP AND OPERATION METHOD FOR ANALYSIS APPARATUS, AND ANALYSIS SYSTEM**

(57)    The present disclosure provides an analysis device for a detection chip, an analysis system and a method of operating the analysis device. The analysis device includes a loading part, a temperature control part and a signal detection part. The loading part is configured to receive and hold the detection chip in use and is capable of moving the detection chip. The temperature control part includes a heater and a cooler, the heater is configured to heat the detection chip and the cooler is configured to cool the detection chip. The signal detection part includes an optical sensor. The optical sensor is configured to receive light from the detection chip and perform detection according to the light. The analysis system includes the analysis device and the detection chip. The method includes: moving the loading part holding the detection chip to the temperature control part; adjusting a temperature of the detection chip by the heater and the cooler; moving the loading part holding the detection chip to the signal detection part, and acquiring light from the detection chip by the optical sensor; and analyzing the light from the detection chip, to obtain analysis result.

| analysis device 100 |
|---|
| loading part 110 |
| temperature control part 120 |
| heater 121 |
| cooler 122 |
| signal detection part 130 |
| optical sensor 131 |

FIG. 1

## Description

CROSS REFERENCE TO RELATED APPLICATIONS

The present application claims the priority of Chinese patent application No. 202010367897.7, filed on April 30, 2020, and the entire content of the Chinese patent application is incorporated herein by reference as a part of the present application.

TECHNICAL FIELD

Embodiments of the present disclosure relate to an analysis device for a detection chip and a method of operating the analysis device, and an analysis system.

BACKGROUND

Digital polymerase chain reaction chip technology (dPCR) is to fully dilute nucleic acid samples so that the number of sample templates in each reaction chamber is less than or equal to 1, so as to achieve absolute quantification of single-molecule DNA. Due to the dPCR has the advantages of high sensitivity, strong specificity, high detection throughput, accurate quantification and the like, it is widely used in clinical diagnosis, gene instability analysis, single-cell gene expression, environmental microbial detection and prenatal diagnosis and the like.

SUMMARY

At least one embodiment of the present disclosure provides an analysis device for a detection chip, the analysis device for the detection chip comprises a loading part, a temperature control part and a signal detection part,

the loading part is configured to receive and hold the detection chip in use, and the loading part is capable of moving the detection chip;
the temperature control part comprises a heater and a cooler, the heater is configured to heat the detection chip and the cooler is configured to cool the detection chip; and
the signal detection part comprises an optical sensor, and the optical sensor is configured to receive light from the detection chip and perform detection according to the light.

For example, in the analysis device according to at least one embodiment of the present disclosure, the loading part comprises:

a transport structure, configured to hold the detection chip and at least partially drivable; and
a driver, configured to be capable of driving the transport structure, to move the detection chip back and forth among a first position, a second position and a third position,

the first position allows the detection chip to be received in the transport structure;
the second position allows the temperature control part to adjust a temperature of the detection chip; and
the third position allows the optical sensor of the signal detection part to receive the light from the detection chip.

For example, in the analysis device according to at least one embodiment of the present disclosure, the transport structure comprises:

a stage, configured to hold the detection chip in use;
a movable platform, configured to be connected to the driver, so as to move under a driving of the driver; and
a bracket, configured to connect the stage and the movable platform, thereby the stage is driven under a condition that the movable platform is driven.

For example, in the analysis device according to at least one embodiment of the present disclosure, the bracket comprises:

a first portion, configured to hold the stage; and
a second portion, configured to be connected to the movable platform in use,
the first portion extends in a first direction, the second portion extends in a second direction, and the first direction is perpendicular to the second direction.

For example, in the analysis device according to at least one embodiment of the present disclosure, the stage has a hollow region, so that a side surface of the detection chip in contact with the stage is at least partially exposed to the cooler under a condition that the detection chip is placed on the stage.

For example, in the analysis device according to at least one embodiment of the present disclosure, the detection chip comprises a heating electrode,

the heater comprises a contact electrode, the contact electrode is configured to be in electrical contact with the heating electrode of the detection chip in use, and the heater is further configured to apply an electrical signal to the heating electrode of the detection chip by the contact electrode, so that the heating electrode heats the detection chip.

For example, in the analysis device according to at least one embodiment of the present disclosure, the heater is configured to provide an infrared ray or airflow for heating to the detection chip, to heat the detection chip.

For example, in the analysis device according to at least one embodiment of the present disclosure, the temperature control part further comprises a temperature sensor, and the temperature sensor is configured to detect a temperature of the detection chip.

For example, in the analysis device according to at least one embodiment of the present disclosure, the temperature sensor and the cooler are configured to be spaced apart from each other, to allow the detection chip to be sandwiched between the temperature sensor and the cooler.

For example, in the analysis device according to at least one embodiment of the present disclosure, the temperature sensor comprises an infrared temperature sensor or a thermocouple temperature sensor.

For example, in the analysis device according to at least one embodiment of the present disclosure, the cooler comprises a fan or a semiconductor refrigeration sheet.

For example, in the analysis device according to at least one embodiment of the present disclosure, the signal detection part further comprises:

a light source, configured to provide light in use, to illuminate the detection chip; and
a light transmission part, configured to transmit the light provided by the light source to the detection chip and transmit light reflected or transmitted by the detection chip to the optical sensor in use.

For example, in the analysis device according to at least one embodiment of the present disclosure, the light source comprises a laser or a fluorescent light source.

For example, in the analysis device according to at least one embodiment of the present disclosure, the optical sensor comprises an image sensor, so as to be configured to acquire an optical image of the detection chip for analysis.

For example, in the analysis device according to at least one embodiment of the present disclosure, the analysis device further comprises a controller, and the controller is configured to perform at least one of following operations:

connecting to the loading part in a signal connection manner, to control the loading part to move;
connecting to the heater in a signal connection manner, to control the heater to heat the detection chip;
connecting to the cooler in a signal connection manner, to control the cooler to cool the detection chip; and
connecting to the optical sensor in a signal connection manner, to analyze the light from the detection chip.

For example, the analysis device according to at least one embodiment of the present disclosure further comprises at least one of a group consisting of a display screen, a touch sensor, a power interface, and a data transmission interface.

At least one embodiment of the present disclosure provides an analysis system, the analysis system comprises:

an analysis device as described in any embodiment of the present disclosure; and

the detection chip.

At least one embodiment of the present disclosure further provides a method of operating an analysis device as described in any embodiment of the present disclosure, the method comprises:

moving the loading part holding the detection chip to the temperature control part;
adjusting a temperature of the detection chip by the heater and the cooler;
moving the loading part holding the detection chip to the signal detection part, and acquiring light from the detection chip by the optical sensor; and
analyzing the light from the detection chip, to obtain analysis result.

For example, in the method according to at least one embodiment of the present disclosure, the adjusting the temperature of the detection chip by the heater and the cooler comprises:
cyclically maintaining the detection chip at at least two temperatures by the heater and the cooler.

For example, in the method according to at least one embodiment of the present disclosure, the acquiring the light from the detection chip by the optical sensor comprises: acquiring an optical image of the detection chip by an image sensor; and

the analyzing the light from the detection chip, to obtain the analysis result comprises:
converting the optical image to a grayscale image;
identifying a reaction chamber of the detection chip in the grayscale image;
determining a spaced line in the grayscale image according to the identified reaction chamber;
dividing the grayscale image, to obtain a plurality of chamber image blocks, according to the spaced line; and
determining a chamber image block with a pixel mean square error being greater than a preset threshold in the plurality of chamber image blocks as a target image block.

BRIEF DESCRIPTION OF THE DRAWINGS

In order to explain the technical solutions of the embodiments of the present disclosure more clearly, the drawings of the embodiments will be briefly introduced below. It is obvious that the described drawings are only related to some embodiments of the present disclosure and thus are not limitative to the present disclosure.

FIG 1 is a schematic block diagram of an analysis device for a detection chip according to at least one embodiment of the present disclosure;

FIG 2 is a schematic block diagram of a loading part according to at least one embodiment of the present disclosure;

FIG 3 is a schematic structural diagram of a transport structure in an exploded state according to at least one embodiment of the present disclosure;

FIG 4 is a schematic structural diagram of a transport structure in an assemble state according to at least one embodiment of the present disclosure;

FIG 5 is a schematic block diagram of a detection chip according to at least one embodiment of the present disclosure;

FIG 6 is a schematic structural diagram of a temperature control part in an exploded state according to at least one embodiment of the present disclosure;

FIG 7 is a schematic structural diagram of a temperature control part in an assemble state according to at least one embodiment of the present disclosure;

FIG 8 is a schematic structural diagram of a signal detection part according to at least one embodiment of the present disclosure;

FIG 9 is a schematic structural diagram of a specific example of a signal detection part according to at least one embodiment of the present disclosure;

FIG 10 is a schematic structural diagram of a loading part, a temperature control part and a signal detection part in an assembled state according to at least one embodiment of the present disclosure;

FIG 11 is a schematic block diagram of an analysis device according to at least one embodiment of the present disclosure;

FIG 12 is a front view of an analysis device according to at least one embodiment of the present disclosure;

FIG 13 is a rear view of an analysis device according to at least one embodiment of the present disclosure;

FIG 14 is a perspective view of an analysis device according to at least one embodiment of the present disclosure;

FIG 15 is a schematic block diagram of an analysis system according to at least one embodiment of the present disclosure;

FIG 16 is a flow diagram of a method for operating an analysis device according to at least one embodiment of the present disclosure;

FIG 17A, FIG 17B and FIG 17C show a process of implementing step S320 according to at least one embodiment of the present disclosure;

FIG 18 is a temperature change diagram of a temperature control cycle according to at least one embodiment of the present disclosure;

FIG 19 shows a cross-sectional view of an analysis device according to at least one embodiment of the present disclosure when step S360 is performed;

FIG 20 is a flow diagram of step S380 according to at least one embodiment of the present disclosure;

FIG 21A is a distribution diagram of sums of row pixel values of an auxiliary image according to at least one embodiment of the present disclosure;

FIG 21B is a distribution diagram of sums of column pixel values of an auxiliary image according to at least one embodiment of the present disclosure;

FIG 22A is a schematic diagram of troughs in the row direction of an auxiliary image according to at least one embodiment of the present disclosure;

FIG 22B is a schematic diagram of troughs in the column direction of an auxiliary image according to at least one embodiment of the present disclosure; and

FIG 23 is an example of an auxiliary image according to at least one embodiment of the present disclosure.

## DETAILED DESCRIPTION

In order to make objects, technical details and advantages of the embodiments of the present disclosure apparent, the technical solutions of the embodiments of the present disclosure will be described in a clearly and fully understandable way in connection with the drawings related to the embodiments of the present disclosure. It is obvious that the described embodiments are just a part but not all of the embodiments of the present disclosure. Based on the described embodiments herein, those skilled in the art can obtain other embodiment(s), without any inventive work, which should be within the scope of the invention.

Unless otherwise defined, all the technical and scientific terms used herein have the same meanings as commonly understood by one of ordinary skill in the art to which the present disclosure belongs. The terms, such as "first," "second," or the like, which are used in the description and the claims of the present disclosure, are not intended to indicate any sequence, amount or importance, but for distinguishing various components. The terms, such as "comprise/comprising," "include/including," or the like are intended to specify that the elements or the objects stated before these terms encompass the elements or the objects and equivalents thereof listed after these terms, but not preclude other elements or objects. The terms, such as "connect/connecting/connected," "couple/coupling/coupled" or the like, are not limited to a physical connection or mechanical connection, but may include an electrical connection/coupling, directly or indirectly. The terms, "on," "under," "left," "right," or the like are only used to indicate relative position relationship, and when the position of the object which is described is changed, the relative position relationship may be changed accordingly.

In order to keep the following description of the embodiments of the present disclosure clear and concise, the present disclosure omits detailed descriptions of known functions and known components.

Some dPCR products usually require a plurality of ancillary apparatuses to obtain an analysis result, which leads to long detecting time, high detecting cost, multiple operation steps, and the risk of reagent contamination.

At least one embodiment of the present disclosure provides an analysis device for a detection chip, an analysis system, and a method for operating the analysis device. The analysis device of the embodiment integrates a loading part, a temperature control part, and a signal detection part, so that the detection of a detection chip can be realized with a single device, thereby reducing the number of required ancillary apparatus, simplifying the operation steps, shortening detection time, and reducing the risk of reagent contamination.

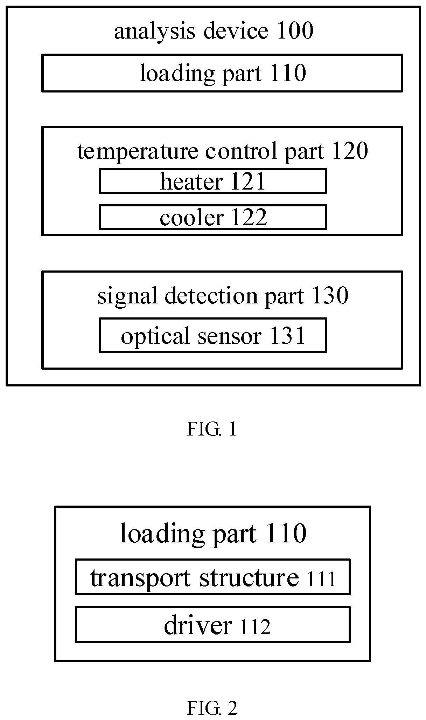

FIG 1 is a schematic block diagram of an analysis device for a detection chip according to at least one embodiment of the present disclosure. As shown in FIG 1, an analysis device 100 for a detection chip according to at least one example of the present disclosure may at least include a loading part 110, a temperature control part 120 and a signal detection part 130.

The loading part 110 is configured to receive and hold the detection chip in use and allow the detection chip to be moved to the temperature control part and the signal detection part.

The temperature control part 120 includes a heater 121 and a cooler 122. The heater 121 is configured to heat the detection chip loaded in the analysis device, and the cooler 122 is configured to cool the detection chip loaded in the analysis device, thereby realizing control of the temperature of the detection chip.

The signal detection part 130 includes an optical sensor 131. The optical sensor 131 is configured to receive light from the detection chip and perform detection according to the light of the detection chip.

It should be understood that the detection chip described in the various embodiments of the present disclosure may be any type of biological detection chip or chemical detection chip, such as various microfluidic chips, and the embodiments of the present disclosure are not limited thereto.

FIG 2 is a schematic block diagram of the loading part according to at least one embodiment of the present disclosure. The loading part 110 may include a transport structure 111 and a driver 112.

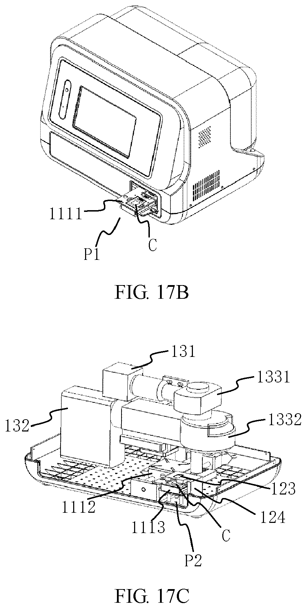

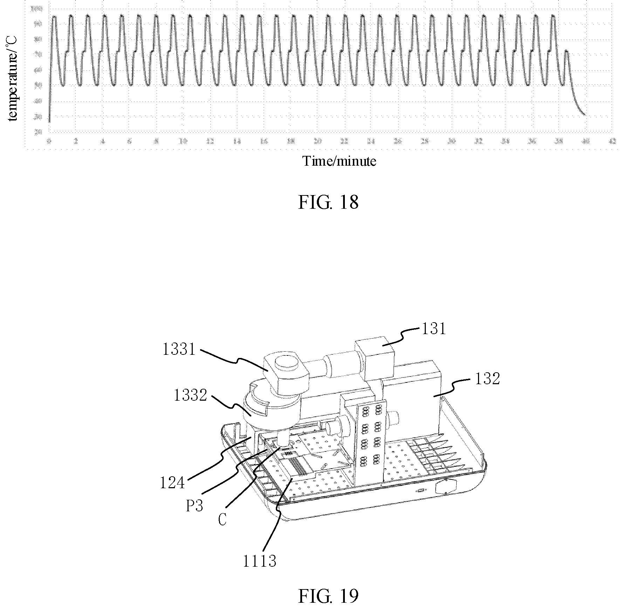

The transport structure 111 is configured to hold the detection chip and may be at least partially driven. The driver 112 is configured to be capable of driving the transport structure 111. For example, the driver 112 may be operatively connected to the transport structure 111, so that the detection chip is moved back and forth among a first position, a second position and a third position. In at least one embodiment, the first position allows the detection chip to be received in the transport structure 111, that is, the first position allows the user to put the detection chip loaded with the detection sample into the loading part 110. The second position allows the temperature control part 120 to adjust the temperature of the detection chip. The third position allows the optical sensor 131 of the signal detection part 130 to receive the light from the detection chip. For example, FIG 17B, which will be described below, shows an example of the first position P1 in at least one embodiment of the present disclosure. For example, FIG 17C, which will be described below, shows an example of the second position P2 in at least one embodiment of the present disclosure. For example, FIG 19, which will be described below, shows an example of the third position P3 in at least one embodiment of the present disclosure.

However, it should be understood that, in some embodiments, the loading part 110 may not include the driver 112, so that the transport structure 111 may be manually moved (for example, pushed or pulled), which is not limited in the embodiments of the present disclosure.

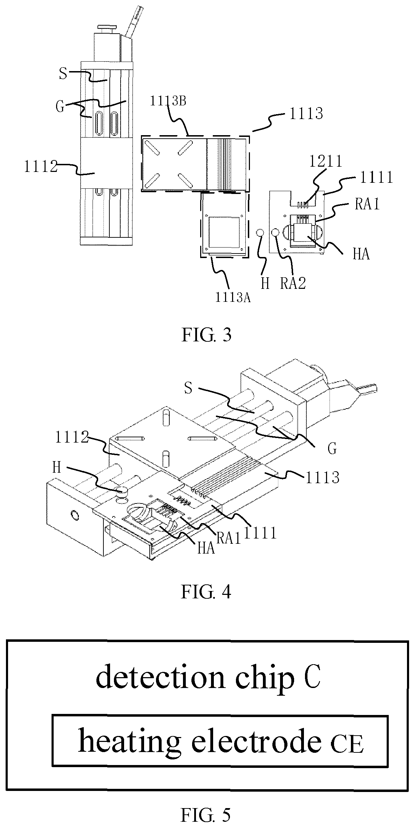

FIG 3 is a schematic structural diagram of an exploded state of a transport structure according to at least one embodiment of the present disclosure, and FIG 4 is a schematic structural diagram of an assemble state of a transport structure according to at least one embodiment of the present disclosure. As shown in FIG 3 and FIG 4, the transport structure 111 may include a stage 1111, a movable platform 1112 and a bracket 1113.

The stage 1111 is configured to hold the detection chip in use. In the example in the figure, the stage 1111 is of a rectangular plate shape and is capable of being movably arranged on the bracket 1113. The stage 1111 has a first recessed region RA1 for accommodating the detection chip. The outline of the first recessed region RA1 is usually basically the same as the shape of the detection chip, as shown in the figure, both are rectangular. In order to facilitate the user to put in and take out the detection chip by fingers, for example, a semi-circular recessed part protrudes from a side of the first recessed region RA1, so as to accommodate the fingers holding the detection chip.

For example, the stage 1111 may be formed of a high temperature resistant material, and the high temperature resistant material may be, for example, metal, plastic, ceramic, rubber, resin, and the like. The heat distortion temperature of the high temperature resistant material forming the stage 1111 may be, for example, above 100°C, 200°C, 300°C, 400°C and 500°C. The stage 1111 may also be formed of a material with a high temperature resistance and poor thermal conductivity. For example, in a specific embodiment, the stage 1111 may be formed of ceramic, so that the stage 1111 has a lighter weight and can withstand high temperature.

In some embodiments, the stage 1111 may further include a spirit level H, so as to detect whether the stage 1111 is level. For example, in a case where the stage 1111 has a second recessed region RA2, the spirit level H may be accommodated and fixed in the second recessed region RA2. However, it should be understood that the stage 1111 may not have the second recessed region RA2, the spirit level H is attached to the stage 1111 by an adhesive or the like, and the embodiments of the present disclosure are not limited thereto. The spirit level H may be, for example, a bubble spirit level, an inductive spirit level and a capacitive spirit level, etc., and the embodiments of the present disclosure are not limited thereto. The detection chip carried on the stage 1111 can be kept level by the spirit level H, thereby helping the optical sensor 131 to receive the light from the detection chip.

As shown in FIG 3 and FIG 4, the stage 1111 may have a hollow region HA, so that a side surface of the detection chip in contact with the stage 1111 is at least partially exposed, for example, exposed to the cooler 122 of the temperature control part 120, while the detection chip is placed on the stage 1111. According to actual requirements, the hollow region HA may have any suitable shape, such as a circle, a triangle, a rectangle, a pentagon, a hexagon or other irregular shapes, etc. For another example, the hollow region HA may have one or more openings, and the embodiments of the present disclosure are not limited thereto. A size of a projection of the detection chip on a plane where the hollow region HA is located is larger than a size of the hollow region HA, so that the detection chip is carried on the stage 1111.

The movable platform 1112 is configured to be operatively connected to the driver 112, so as to move under the drive of the driver 112. The driver 112 may be a motor, for example, and the movable platform 1112 is connected to a driving end of the motor, for example. For example, the driver 112 may be a rotating motor, a driving end of the rotating motor is connected to a lead screw S so that the lead screw S can be rotated, and the movable platform 1112 is connected to the lead screw S through a nut threaded with the lead screw S, so that the rotation of the lead screw S is converted into horizontal movement, so as to move the movable platform 1112 by the drive of the driver 112. In addition, a guide rod G parallel to the lead screw S may also be provided. The movable platform 1112 is movably connected to the guide rod G The guide rod G plays a role of restraining the movable platform 1112. It should be understood that the number of the guide rods G and the number of the lead screws S shown in FIG 3 and FIG 4 are all exemplary, and the embodiments of the present disclosure are not limited thereto. For example, the driver 112 may be a linear motor, and a mover of the linear electric machine may be connected to the movable platform 1112, so as to drive the movable platform 1112 to move. The embodiment of the present disclosure does not limit how the driver 112 drives the movable platform 1112, and for example, a gear and rack combination may also be used to convert a rotational movement into a horizontal movement.

The movable platform 1112 may be formed of any rigid material, for example, metal, plastic, ceramic, rubber, resin, etc., which is not limited in the embodiments of the present disclosure. In addition, it should be understood that the shape of the movable platform 1112 shown in FIG 3 and FIG 4 is only exemplary, and the movable platform 1112 may have any suitable shape according to actual requirements.

The bracket 1113 is configured to connect the stage 1111 to the movable platform 1112, thereby enabling the stage 1111 to be driven when the movable platform 1112 is driven.

As shown by a dashed box in FIG 3, the bracket 1113 may include a first portion 1113A and a second portion 1113B. The first portion 1113A is configured to hold the stage 1111 in use. The second portion 1113B is configured to connect to the movable platform 1112 in use. The first portion 1113A extends in a first direction, the second portion 1113B extends in a second direction, and the first direction is perpendicular to the second direction. The bracket 1113 is formed into an L shape or a T shape, thereby reducing a size in a single direction, which helps to reduce the overall volume of the analysis device.

The first portion 1113A of the bracket 1113, for example, may be connected to the stage 1111 through a spring or the like. For example, the first portion 1113A may be connected to the stage 1111 through four springs corresponding to four corners of the stage 1111, so that a level state of the stage 1111 can be adjusted by adjusting the corresponding spring.

The second portion 1113B of the bracket 1113, for example, may be detachably connected or fixedly connected to the movable platform 1112 by screws or the like, so as to allow the movable platform 1112 to drive the bracket 1113 to move together. Alternatively, the second portion 1113B may be integrally formed with the movable platform 1112.

The bracket 1113 may be formed of any rigid material, for example, metal, plastic, ceramic, rubber, resin, etc., which is not limited in the embodiments of the present disclosure. In addition, it should be understood that a shape of the bracket 1113 shown in FIG 3 and FIG 4 is only exemplary, and the bracket 1113 may have any suitable shape according to actual requirements.

FIG 5 is a schematic block diagram of a detection chip according to at least one embodiment of the present disclosure. In some embodiments, the detection chip C may include a heating electrode CE, and in a case where an electrical signal is received, the heating electrode CE or a resistance wiring electrically connected to the heating electrode CE can generate heat to heat the detection chip C. The detection chip C may further include an electrode for other purposes, such as an electrode used to apply an electrical signal to drive the sample to move in the detection chip C. As described above, the embodiments of the present disclosure do not limit the type and structure of the detection chip C.

As shown in FIG 3 and FIG 4, in some embodiments, the heater 121 may include a contact electrode 1211. The contact electrode 1211, for example, may be formed of a high temperature resistant metal material. The contact electrode 1211 is configured to be in electrical contact with the heating electrode CE of the detection chip C in use. The heater 121 is further configured to apply an electrical signal to the heating electrode CE of the detection chip C by the contact electrode 1211, so that the heating electrode CE heats the detection chip C. For example, the contact electrode 1211 may be arranged on the stage 1111 and exposed, so as to allow the contact electrode 1211 to contact with the exposed heating electrode CE of the detection chip C in use, thereby applying an electrical signal (for example, a direct current voltage or the alternating current voltage) to the heating electrode CE of the detection chip C. After the detection chip C is arranged on the stage 1111, the contact electrode 1211 contacts with the heating electrode CE of the detection chip C, so that the electrical signal can be transmitted. The contact electrode 1211 may be electrically connected to a power source or a controller through a line passing through the stage 1111 to receive a control signal.

In addition, the contact electrode 1211 may further play a role in fixing the detection chip C. For example, after the detection chip C is arranged on the stage 1111, the contact electrode 1211 may be moved by a way of spring or the like, so that the contact electrode 1211 contacts the heating electrode CE of the detection chip C and exerts a force on the detection chip C, thereby fixing the detection chip C by the contact electrode 1211 and the stage 1111.

In other embodiments, the detection chip may not have a heating electrode, and the heater 121 may be configured to provide an infrared ray or airflow for heating to the detection chip, so as to heat the detection chip. For example, the heater 121 may be an infrared heater or a gas heater (for example, heating the air by a resistance and driving the heated air to flow by a fan) and the like, and the embodiments of the present disclosure are not limited thereto.

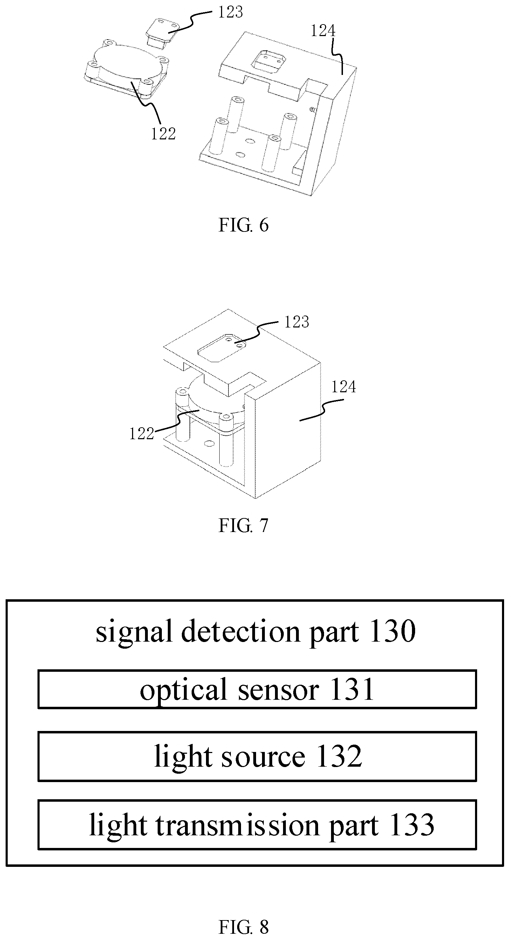

FIG 6 is a schematic structural diagram of an exploded state of a temperature control part according to at least one embodiment of the present disclosure, and FIG 7 is a schematic structural diagram of an assemble state of a temperature control part according to at least one embodiment of the present disclosure. As shown in FIG 6 and FIG7, the temperature control part 120, for example, may include a temperature sensor 123. The temperature sensor 123 is configured to detect the temperature of the detection chip. The temperature sensor 123 may be a conventional temperature sensor, which will not be repeated in the embodiments of the present disclosure. For example, the temperature sensor 123 may include an infrared temperature sensor or a thermocouple temperature sensor. It should be understood that, in some embodiments of the present disclosure, if the detection chip includes a temperature sensor, there is no need to provide the temperature sensor 123 in the analysis device.

As shown in FIG 7, the temperature sensor 123 and the cooler 122 are configured to be spaced apart from each other to allow the detection chip to be sandwiched between the temperature sensor 123 and the cooler 122. As shown in FIG 6 and FIG7, the temperature control part 120 may further include a temperature control bracket 124, and the temperature sensor 123 and the cooler 122 are connected to the temperature control bracket 124 so as to be spaced apart from each other. It should be understood that positions of the temperature sensor 123 and the cooler 122 in FIG 6 and FIG 7 are only exemplary, and the embodiments of the present disclosure are not limited thereto. For example, in other embodiments, the temperature sensor 123 may be above or below the detection chip in use, and the cooler 122 may be on a side of the detection chip in use.

For example, the cooler 122 may include but is not limited to a fan or a semiconductor refrigeration sheet, and the specific type of the cooler 122 is not limited in the embodiment of the present disclosure. As shown in FIG 6 and FIG 7, the cooler 122 may be, for example, a fan which has a roughly circular shape and is fixed in the temperature control bracket 124 by four mounting posts arranged at four corners.

The temperature control bracket 124 may have an opening to expose the temperature sensor 123 and the cooler 122 to the detection chip in use, thereby allowing the temperature sensor 123 to detect the temperature of the detection chip and the cooler 122 to cool the detection chip.

As shown in FIG 6 and FIG7, a cross section of the temperature control bracket 124 may be in a shape of "⌐", the cooler 122 is arranged in an opening of the "C" shape, the temperature sensor 123 may be on a surface of the top of the temperature control bracket 124 away from the bottom, the cooler may be on a surface of the bottom of the temperature control bracket 124 facing the top, and the top of the temperature control bracket 124 may have an opening to partially expose the temperature sensor 123, thereby allowing the temperature sensor 123 to detect the temperature of the detection chip when the detection chip is between the top and bottom of the temperature control bracket 124.

The temperature control bracket 124 may be formed of any rigid material, for example, metal, plastic, ceramic, rubber, resin, etc., which is not limited in the embodiments of the present disclosure. In addition, it should be understood that the shape of the temperature control bracket 124 shown in FIG 6 and FIG 7 is only exemplary, and the temperature control bracket 124 may have any suitable shape according to actual requirements.

FIG 8 is a schematic structural diagram of a signal detection part according to at least one embodiment of the present disclosure. As shown in FIG 8, in at least one embodiment of the present disclosure, in addition to the optical sensor 131, the signal detection part 130 may further include a light source 132 and a light transmission portion 133.

The optical sensor 131 may be, for example, an image sensor, so as to be configured to acquire an optical image of the detection chip for analysis. For example, the optical sensor 131 may include a charge coupled device (CCD) or a complementary metal oxide semiconductor (CMOS). However, it should be understood that in other embodiments, the optical sensor 131 may also be a photodiode, a photo resistor, an infrared sensor, an ultraviolet sensor, etc., and the embodiments of the present disclosure are not limited thereto.

The light source 132 may be configured to provide light in use to illuminate the detection chip. The light transmission portion 133 may be configured to transmit the light provided by the light source 132 to the detection chip and transmit the light reflected or transmitted by the detection chip to the optical sensor 131 in use.

For example, the light source 132 may be of various types that may emit visible light, infrared light, etc., for example, including a laser or a fluorescent light source. The wavelengths of the laser and the fluorescent light source may be selected according to actual needs, which is not limited in the embodiments of the present disclosure.

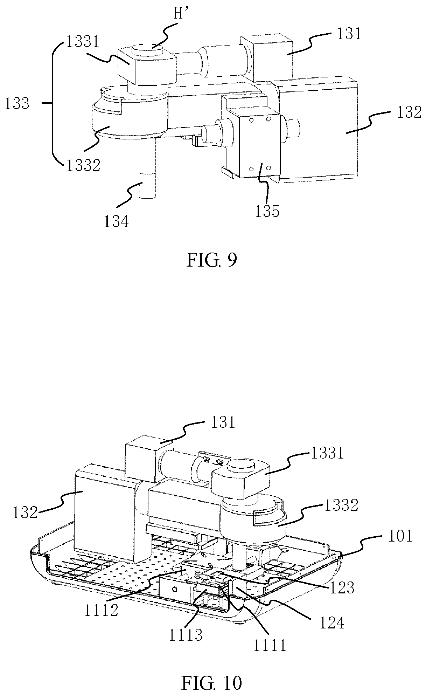

FIG 9 is a schematic structural diagram of a specific example of a signal detection part according to at least one embodiment of the present disclosure. As shown in FIG 9, in some embodiments, the light transmission portion 133 may include a 90° turning prism system 1331 and a reflective light path system 1332. The 90° turning prism system 1331 may be configured to transmit light from the detection chip to the optical sensor 131. The reflective light path system 1332 may be configured to transmit light from the light source 132 to illuminate the detection chip, and the reflective light path system 1332 may further include an optical filter. The optical filter is on a light path from the detection chip to the optical sensor 131 to filter the light transmitted on the light path, thereby only allowing the light with a set wavelength to pass through. Both the 90° turning prism system 1331 and the reflective light path system 1332 may adopt conventional designs in the art, which will not be repeated in the present disclosure.

As shown in FIG 9, in some embodiments, the signal detection part 130 may further include an objective lens 134. The objective lens 134 is configured to acquire light from the detection chip. For example, the objective lens 134 may include a lens.

As shown in FIG 9, in some embodiments, the signal detection part 130 may further include a holder 135. The holder 135 is used for fixing and carrying at least portion of components in the signal detection part 130, such as the light source 132 and the light transmission portion 133. In some embodiments, the holder 135 may also be configured to adjust a distance between the light transmission portion 133 and the detection chip, so that the detection chip is at the focal point of the light transmission portion 133. The holder 135 may adopt a conventional design in the field, which will not be repeated in the present disclosure.

In some embodiments, the signal detection part 130 may further include a spirit level H', to detect whether the signal detection part 130 is level. For example, the spirit level H' may be connected to the light transmission portion 133, the optical sensor 131, the light source 132, and the like. In FIG 9, as an example, the spirit level H' is connect to the 90° turning prism system 1331. However, it should be understood that the embodiments of the present disclosure are not limited thereto. The spirit level H' may be connected to other components of the signal detection part 130 by any suitable means, such as adhesing, magnetic adsorption, threaded connection, etc., which are not limited in the embodiment of the present disclosure. The spirit level H', for example, may be a bubble level, an inductive level, a capacitive level, etc., which is not limited in the embodiments of the present disclosure. For example, the spirit level H' can make the light transmitted from the light transmission portion 133 to the detection chip perpendicular to the detection chip or the light from the detection chip enter the optical transmission portion 133 vertically, thereby facilitating subsequent signal processing. For example, a step of performing angle correction on the image of the detection chip may be omitted.

FIG 10 is a schematic structural diagram of a loading part, a temperature control part and a signal detection part in an assembled state according to at least one embodiment of the present disclosure. As shown in FIG 10, the analysis device may include a base 101, and the loading part 110, the temperature control part 120 and the signal detection part 130 are all arranged on the base 101. For example, the loading part 110, the temperature control part 120 and the signal detection part 130 are fixed on the base 101 by using a screw, a clamp, adhesive, and the like. The temperature control part 120 and the signal detection part 130 may be arranged along a moving path of the movable platform 1112 in the loading part 110, so that the detection chip holding on the stage 1111 may be moved to the temperature control part 120 by the movement of the movable platform 1112 to perform temperature control and may be moved to the signal detection part 130 to acquire the light from the detection chip.

However, it should be understood that the arrangement shown in FIG 10 is exemplary, and different arrangements may be used according to the different structures and shapes of the loading part 110, the temperature control part 120, and the signal detection part 130, which are not limited in the embodiments of the present disclosure.

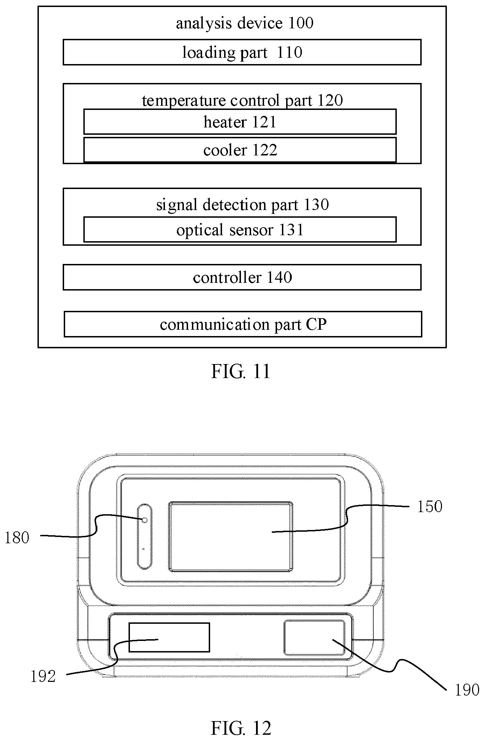

FIG 11 is a schematic block diagram of an analysis device according to at least one embodiment of the present disclosure. As shown in FIG 11, the analysis device 100 further includes one or more controllers 140. The one or more controllers 140 may be configured to perform at least one of the flowing operations:

connecting to the loading part 110 in a signal connection manner, to control the loading part 110 to move;

connecting to the heater 121 in a signal connection manner, to control the heater 121 to heat the detection chip;

connecting to the cooler 122 in a signal connection manner, to control the cooler 122 to cool the detection chip; and

connecting to the optical sensor 131 in a signal connection manner, to analyze the light from the detection chip.

The controller 140 may be implemented, for example, by a central processing unit (CPU), a digital signal processor (DSP), a single-chip microcomputer, a field programmable gate array (FPGA), a complex programmable logic device (CPLD), or an application specific integrated circuit (ASIC) and the like, and the embodiments of the present disclosure are not limited thereto.

It should be understood that, in some embodiments, the controller 140 may be implemented as a plurality of sub-controllers, and the plurality of sub-controllers may respectively perform at least one of the foregoing operations. The plurality of sub-controllers may be separately provided or integrated in one controller, and the embodiments of the present disclosure are not limited thereto.

As shown in FIG 11, in some embodiments, the analysis device 100 may further include a communication part CP. The communication part CP is configured to form a signal connection with a mobile terminal, a server, and the like. The signal connection may be a wired connection or a wireless connection, which is not limited in the embodiments of the present disclosure. Exemplary, the wireless connection includes Wi-Fi, Bluetooth, Wireless Direct, and infrared ray. Exemplary, the wired connection includes Universal Serial Bus (USB), FireWire, Thunderbolt, or any connection that requires a physical cable.

FIG 12, FIG 13 and FIG 14 are respectively a front view, a rear view and a perspective view of an analysis device according to at least one embodiment of the present disclosure. As shown in FIG 12, the analysis device according to at least one embodiment of the present disclosure may further include a display screen 150. The display screen 150 is configured to display. For example, the display screen 150 may be a liquid crystal display screen, an organic light emitting diode (OLED) display screen, a quantum dot light emitting diode (QLED) display screen, a micro light emitting diode display screen, an electronic ink screen, and an electronic paper display screen, etc., and the embodiments of the present disclosure are not limited thereto. For example, the display screen 150 may be a touch display screen to receive inputting of a user. However, it should be understood that, in some embodiments, the analysis device may not include the display screen 150, but may be connected to a separately provided display screen or output data, such as analysis result, in the form of digital file or physical file, and the embodiments of the present disclosure are not limited thereto.

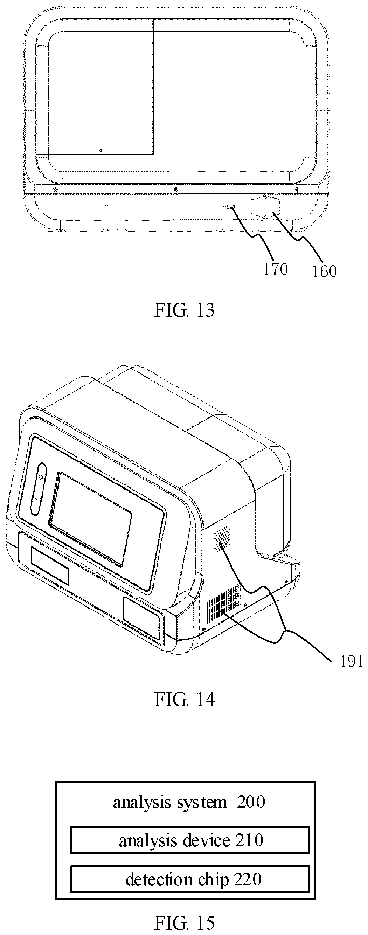

As shown in FIG 13, the analysis device according to at least one embodiment of the present disclosure may further include a power interface 160. The analysis device is connected to a power source by the power interface 160 to acquire electrical energy. However, it should be understood that, in some embodiments, the analysis device may not have the power interface 160, but has a built-in primary battery or a built-in secondary battery, or a built-in solar battery, and the embodiments of the present disclosure are not limited thereto.

As shown in FIG 13, the analysis device according to at least one embodiment of the present disclosure may further include a data transmission interface 170. The data transmission interface 170 is configured to output data of the analysis device, such as analysis result, to an external device, or transmit data from the external device to the analysis device. The data transmission interface 170 may be, for example, a universal serial bus (USB) interface, a serial advanced technology attachment (SATA) interface, or the like. In at least one embodiment, the data transmission interface and the power interface may be combined into one interface, such as a USB interface, which can be used to transmit data as well as power.

As shown in FIG 12, the analysis device according to at least one embodiment of the present disclosure may further include a key 180. The key 180 is configured to acquire a user's input instruction and may be a mechanical key, an optical key, etc., and the embodiments of the present disclosure are not limited thereto. It should be understood that the shape and number of the keys 180 in FIG 12 are only exemplary, and the embodiment of the present disclosure does not limit this.

As shown in FIG 12, the analysis device according to at least one embodiment of the present disclosure may further include a chip loading port 190. The chip loading port 190 allows the stage 1111 to be protruded from the chip loading port, to receive the detection chip.

As shown in FIG 12, the analysis device according to at least one embodiment of the present disclosure may further include a touch sensor 192. The touch sensor 192 is configured to receive and detect a user's touch operation, and convert the user's touch operation into an electrical signal for transmission to a controller or other control devices, such as the controller 140 or an external server. The touch sensor 192 may be, for example, a capacitive touch sensor, a resistive touch sensor, etc., and the embodiments of the present disclosure are not limited thereto. It should be understood that when the display screen 150 is a touch screen or the analysis device includes other forms of input devices (for example, a key 180, a microphone, etc.), the analysis device may not include the touch sensor 192.

As shown in FIG 14, the analysis device according to at least one embodiment of the present disclosure may further include a heat dissipation port 191. For example, the heat dissipation port 191 may be used for releasing heat of the controller 140 or the temperature control part 120. The heat dissipation port 191 may be packaged in a dust-free package to prevent dust from entering the inside of the analysis device.

At least one embodiment of the present disclosure also provides an analysis system. FIG 15 is a schematic block diagram of an analysis system according to at least one embodiment of the present disclosure. As shown in FIG 15, the analysis system 200 includes an analysis device 210 and a detection chip 220. For example, the combination of the analysis device 210 and the unused detection chip 220 may be provided to a user for use by the user. The analysis device 210 may be any analysis device described above. The detection chip 220 may be any detection chip described above.

It should be understood that in some embodiments of the present disclosure, the analysis system 200 may further include more components or parts, and the embodiments of the present disclosure are not limited thereto. The detailed description and technical effect of the analysis device 210 and the detection chip 220 may refer to the above description of the reaction device, which will not be repeated here.

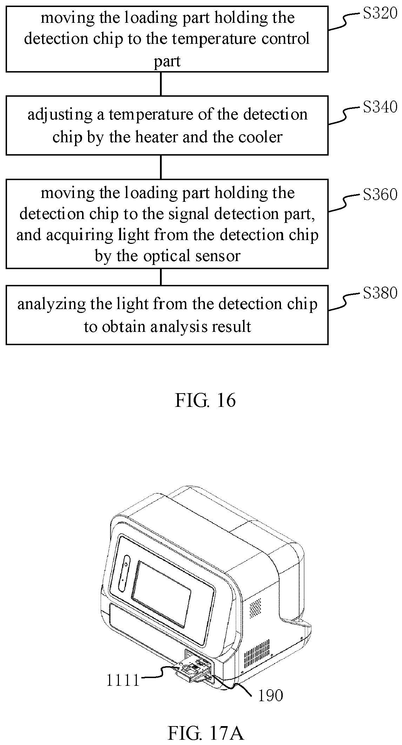

At least one embodiment of the present disclosure also provides a method for operating an analysis device. The method is applicable to the analysis device according to any embodiment of the present disclosure. FIG 16 is a flow schematic diagram of a method for operating an analysis device according to at least one embodiment of the present disclosure. As shown in FIG 16, the method 300 for operating an analysis device according to at least one embodiment of the present disclosure may include the flowing steps:
step S320, moving the loading part carrying the detection chip to the temperature control part.

In step S320, the loading part carrying the detection chip may be manually moved to the temperature control part. In the case where the loading part includes a transport structure configured to carry the detection chip and at least partially be driven and a driver configured to be capable of driving the transport structure, the step S320 may include driving the transport structure carrying the detection chip by the driver, so as to move the detection chip to the temperature control part.

FIG 17A, FIG 17B and FIG 17C show a process of implementing the step S320 according to at least one embodiment of the present disclosure. In FIG 17B and FIG 17C, the detection chip C is shown for convenience of description. As shown in FIG 17A, the stage 1111 of the analysis device according to at least one embodiment of the present disclosure is protruded from the chip loading port 190 of the analysis device, to receive the detection chip. As shown in FIG 17B, the detection chip C is at the first position P1, and the detection chip C is received and held on the stage 1111 at the first position P1. As shown in FIG 17C, the detection chip C is at a second position P2, and the second position P2 allows the temperature control part to adjust the temperature of the detection chip C.

As shown in FIG 16, the method 300 for operating an analysis device according to at least one embodiment of the present disclosure may further include: step S340, adjusting a temperature of the detection chip by the heater and the cooler.

In a case where the detection chip includes a heating electrode and the heater includes a contact electrode, the step S340 may include applying an electrical signal to the heating electrode of the detection chip by the contact electrode, to heat the detection chip by the heating electrode.

In some embodiments, the step S340 further includes: cyclically maintaining the detection chip at at least two temperatures by the heater and the cooler. For example, the detection chip is heated by the heater and is cooled by the cooler, so as to implement a plurality of temperature control cycles to the detection chip, such as thirty temperature control cycles, so that the detection chip performs PCR thermal cycle amplification. Each of a plurality of temperature control cycles includes: maintaining the detection chip at 95 °C for 10 seconds; maintaining the detection chip at 50°C for 10 seconds; and maintaining the detection chip at 72°C for 10 seconds. It should be understood that the temperature control cycle described above is only exemplary, and the embodiments of the present disclosure do not limit this. FIG 18 is a temperature change diagram of a temperature control cycle according to at least one embodiment of the present disclosure. In FIG 18, the horizontal axis represents time, the unit is minute, and the vertical axis represents temperature, the unit is degrees Celsius.

As shown in FIG 16, the method 300 for operating an analysis device according to at least one embodiment of the present disclosure may further include: step S360, moving the loading part holding the detection chip to the signal detection part, and acquiring light from the detection chip by the optical sensor.

In the step S360, the loading part holding the detection chip may be manually moved to the signal detection part. In a case where the loading part includes a transport structure configured to carry the detection chip and at least partially be driven and a driver configured to be capable of driving the transport structure, the step S360 may include driving the transport structure holding the detection chip by the driver, to move the detection chip to the signal detection part.

FIG 19 shows a cross-sectional view of an analysis device according to at least one embodiment of the present disclosure when the step S360 is performed. In FIG 19, the detection chip C is shown for convenience of description. As shown in FIG 19, the detection chip C is at the third position P3, and the third position P3 allows the optical sensor 131 of the signal detection part 130 to acquire the light from the detection chip.

The step S360 may further include: illuminating the detection chip by light, and acquiring the light reflected or transmitted by the detection chip as the light from the detection light by the optical sensor.

In a case where the optical sensor includes an image sensor, the step S360 may include acquiring an optical image of the detection chip by the image sensor. In addition, in a case where the signal detection part further includes a light source and a light transmission part, the step S360 may include: providing light by the light source; transmitting the light provided by the light source by the light transmission part, to illuminate the detection chip; and transmitting the light reflected or transmitted by the detection chip as the light from the detect chip to the optical sensor( or the image sensor included by the optical sensor) by the light transmission part.

As shown in FIG 16, the method 300 for operating an analysis device according to at least one embodiment of the present disclosure may further include: step S380, analyzing the light from the detection chip to obtain the analysis result.

It should be understood that one or more steps and at least portion of the sub-steps in the above-mentioned method 300 may be executed by software or firmware, for example, executed by a mobile terminal, a server, etc. being in signal connection with the analysis device, and the embodiments of the present disclosure are not limited thereto.

In some embodiments, in a case where the acquiring the light from the detection chip by the optical sensor includes acquiring an optical image of the detection chip by the image sensor, the step S380 may include: step S3802, converting the optical image to a grayscale image.

For example, step S3802 may further include performing Gaussian smoothing processing on the grayscale image, to reduce the influence of noise.

For example, the method 300 may further include:
step S3804, identifying a reaction chamber of the detection chip in the grayscale image.

In a case where the detection chip includes a circular reaction chamber, in the step S3804, the reaction chamber may be detected out in the grayscale image by a Hough circle transformation algorithm, but it should be understood that the embodiment of the present disclosure is not limited to this.

For example, the method 300 may further include:
step S3806, determining a spaced line in the grayscale image according to an identified reaction chamber.

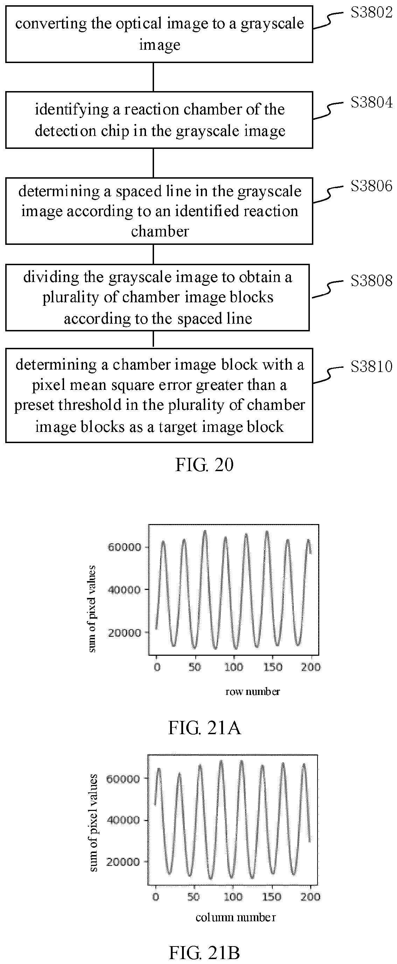

FIG 20 is a flow schematic diagram of the step S380 according to at least one embodiment of the present disclosure.

In some embodiments, the step S3806 may include: drawing a reaction chamber on an auxiliary image that is as large as the grayscale image according to coordinates of a center and a radius of an image zone of the identified reaction chamber. It should be understood that the auxiliary image and the grayscale image have the same size and the number of pixels, and in the auxiliary image, a pixel value of a circle corresponding to the reaction chamber and a pixel value of a center of the circle may be set to any non-zero value, and pixel values of a region outside the reaction chamber may be set to zero.

In some embodiments, the step S3806 may further include: calculating a sum of pixel values of each row of pixels and a sum of the pixel values of each column of pixels in the auxiliary image.

FIG 21A is a distribution diagram of sums of row pixel values of an auxiliary image according to at least one embodiment of the present disclosure, and FIG 21B is a distribution diagram of sums of column pixel values of an auxiliary image according to at least one embodiment of the present disclosure.

In some embodiments, before calculating the sum of pixel values of each row of pixels and the sum of pixel values of each column of pixels in the auxiliary image, the step S3806 may further include performing processing such as angle correction and denoising on the auxiliary image.

In some embodiments, the step S3806 may further include: determining a minimum value of sums of pixel values in a row direction and a minimum value of the sums of pixel values in a column direction in the auxiliary image; taking a row coordinate corresponding to the minimum value in the row direction as a row coordinate of the spaced line extending along the column direction in the grayscale image, and taking a column coordinate corresponding to the minimum value in the column direction as a column coordinate of the spaced line extending along the row direction in the grayscale image. For example, in some embodiments, performing derivation on the sum of pixel values of each row of the auxiliary image and the sum of pixel values of each column of the auxiliary image, performing sign function quantization on derivation results, and performing derivation on results of the quantization, and performing denoising, so as to filter out a wave peak and obtain a trough. The trough in the row direction (that is, the minimum value) corresponds to the spaced line extending in the column direction, and the trough in the column direction (that is, the minimum value) corresponds to the spaced line extending in the row direction.

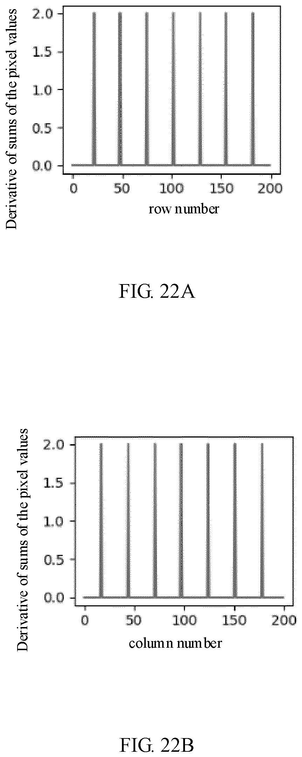

FIG 22A is a schematic diagram of troughs in the row direction of an auxiliary image according to at least one embodiment of the present disclosure, and FIG 22B is a schematic diagram of troughs in the column direction of an auxiliary image according to at least one embodiment of the present disclosure.

For example, the method 300 may further include:
step S3 808, Dividing the grayscale image, to obtain a plurality of chamber image blocks according to the spaced line.

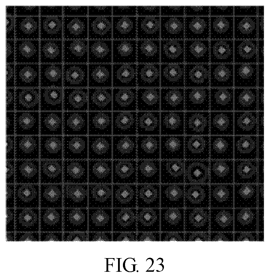

In some embodiments, the step S3803 may include: taking the row coordinate of the minimum value of the sums of the pixel values in the row direction of the auxiliary image as the row coordinate of the spaced line extending along the column direction, and taking the column coordinate of the minimum value of the sums of the pixel values in the column direction of the auxiliary image as the column coordinate of the spaced line extending along the row direction, thereby obtaining the spaced line in the grayscale image. FIG 23 is an example of an auxiliary image according to at least one embodiment of the present disclosure. The auxiliary image also schematically shows positions of the troughs (that is, the minimum value) of the sums of pixel values in the row direction and the position of the troughs (that is, the minimum value) of the sums of pixel values in the column direction, which correspond to the spaced lines in the grayscale image.

For example, the method 300 may further include:

step S3810, determining a chamber image block with a pixel mean square error greater than a preset threshold in the plurality of chamber image blocks as a target image block.

In some embodiments, the step S3810 may further include:

if the reaction chamber identified in the step S3804 overlaps with the spaced line, determining the reaction chamber as an invalid reaction chamber, otherwise determining the reaction chamber as an effective reaction chamber; calculating the pixel mean square error of the chamber image blocks in which the effective reaction chamber is located, and determining a chamber image block with a pixel mean square error greater than a preset threshold as a target image block.

In some embodiments, the step S380 may further include: determining an initial copy number by the following formula according to the number of target image blocks, the total number of reaction chambers of the detection chip and the sample dilution factor:

$$c = [\ln(1\text{-}f/n)]/m$$

In the above formula, the c represents the initial copy number, the f represents the number of target image blocks, the m represents the sample dilution factor, and the n represents the total number of reaction chambers of the detection chip.

The following statements should be noted:

(1) The accompanying drawings involve only the structure(s) in connection with the embodiment(s) of the present disclosure, and other structure(s) can be referred to common design(s).

(2) In case of no conflict, features in one embodiment or in different embodiments can be combined to obtain a new embodiment.

What are described above is related to the specific embodiments of the disclosure only and not limitative to the scope of the present disclosure. The protection scope of the present disclosure shall be based on the protection scope of the claims.

## Claims

1. An analysis device for a detection chip, comprising: a loading part, a temperature control part and a signal detection part,

   wherein the loading part is configured to receive and hold the detection chip in use, and the loading part is capable of moving the detection chip; the temperature control part comprises a heater and a cooler, the heater is configured to heat the detection chip and the cooler is configured to cool the detection chip; and the signal detection part comprises an optical sensor, and the optical sensor is configured to receive light from the detection chip and perform detection according to the light.

2. The analysis device according to claim 1, wherein the loading part comprises:

   a transport structure, configured to hold the detection chip and at least partially drivable; and a driver, configured to be capable of driving the transport structure, to move the detection chip back and forth among a first position, a second position and a third position, wherein the first position allows the detection chip to be received in the transport structure; the second position allows the temperature control part to adjust a temperature of the detection chip; and the third position allows the optical sensor of the signal detection part to receive the light from the detection chip.

3. The analysis device according to claim 2, wherein the transport structure comprises:

   a stage, configured to hold the detection chip in use; a movable platform, configured to be connected to the driver, so as to move under a driving of the driver; and a bracket, configured to connect the stage and the movable platform, thereby the stage is driven under a condition that the movable platform is driven.

**4.** The analysis device according to claim 3, wherein the bracket comprises:

> a first portion, configured to hold the stage; and
> a second portion, configured to be connected to the movable platform in use,
> wherein the first portion extends in a first direction, the second portion extends in a second direction, and the first direction is perpendicular to the second direction.

**5.** The analysis device according to claim 3, wherein the stage has a hollow region, so that a side surface of the detection chip in contact with the stage is at least partially exposed to the cooler under a condition that the detection chip is placed on the stage.

**6.** The analysis device according to any one of claims 1-5, wherein the detection chip comprises a heating electrode,

> the heater comprises a contact electrode, the contact electrode is configured to be in electrical contact with the heating electrode of the detection chip in use, and
> the heater is further configured to apply an electrical signal to the heating electrode of the detection chip by the contact electrode, so that the heating electrode heats the detection chip.

**7.** The analysis device according to any one of claims 1-5, wherein the heater is configured to provide an infrared ray or airflow for heating to the detection chip, to heat the detection chip.

**8.** The analysis device according to any one of claims 1-7, wherein the temperature control part further comprises a temperature sensor, and the temperature sensor is configured to detect a temperature of the detection chip.

**9.** The analysis device according to claim 8, wherein the temperature sensor and the cooler are configured to be spaced apart from each other, to allow the detection chip to be sandwiched between the temperature sensor and the cooler.

**10.** The analysis device according to claim 8 or 9, wherein the temperature sensor comprises an infrared temperature sensor or a thermocouple temperature sensor.

**11.** The analysis device according to any one of claims 1-10, wherein the cooler comprises a fan or a semiconductor refrigeration sheet.

**12.** The analysis device according to any one of claims 1-11, wherein the signal detection part further comprises:

> a light source, configured to provide light in use, to illuminate the detection chip; and
> a light transmission part, configured to transmit the light provided by the light source to the detection chip and transmit light reflected or transmitted by the detection chip to the optical sensor in use.

**13.** The analysis device according to claim 13, wherein the light source comprises a laser or a fluorescent light source.

**14.** The analysis device according to any one of claims 1-13, wherein the optical sensor comprises an image sensor, so as to be configured to acquire an optical image of the detection chip for analysis.

**15.** The analysis device according to any one of claims 1-14, wherein the analysis device further comprises a controller, and the controller is configured to perform at least one of following operations:

> connecting to the loading part in a signal connection manner, to control the loading part to move;
> connecting to the heater in a signal connection manner, to control the heater to heat the detection chip;
> connecting to the cooler in a signal connection manner, to control the cooler to cool the detection chip; and
> connecting to the optical sensor in a signal connection manner, to analyze the light from the detection chip.

**16.** The analysis device according to any one of claims 1-15, wherein the analysis device further comprises at least one of a group consisting of a display screen, a touch sensor, a power interface, and a data transmission interface.

**17.** An analysis system, comprising:

> an analysis device according to any one of claims 1-16; and
> the detection chip.

**18.** A method of operating an analysis device according to any one of claims 1-16, comprising:

> moving the loading part holding the detection chip to the temperature control part;
> adjusting a temperature of the detection chip by the heater and the cooler;
> moving the loading part holding the detection chip to the signal detection part, and acquiring light from the detection chip by the optical sensor; and
analyzing the light from the detection chip, to obtain analysis result.

19. The method according to claim 18, wherein the adjusting the temperature of the detection chip by the heater and the cooler, comprises:
cyclically maintaining the detection chip at at least two temperatures by the heater and the cooler.

20. The method according to claim 18 or claim 19, wherein

the acquiring the light from the detection chip by the optical sensor, comprises:
acquiring an optical image of the detection chip by an image sensor; and
the analyzing the light from the detection chip, to obtain the analysis result, comprises:

converting the optical image to a grayscale image;
identifying a reaction chamber of the detection chip in the grayscale image;
determining a spaced line in the grayscale image according to the identified reaction chamber;
dividing the grayscale image, to obtain a plurality of chamber image blocks, according to the spaced line; and
determining a chamber image block with a pixel mean square error being greater than a preset threshold in the plurality of chamber image blocks as a target image block.

analysis device 100

loading part 110

temperature control part 120

heater 121

cooler 122

signal detection part 130

optical sensor 131

FIG. 1

loading part 110

transport structure 111

driver 112

FIG. 2

FIG. 3

FIG. 4

detection chip C

heating electrode CE

FIG. 5

FIG. 6

FIG. 7

signal detection part 130

optical sensor 131

light source 132

light transmission part 133

FIG. 8

FIG. 9

FIG. 10

analysis device 100

loading part 110

temperature control part 120

heater 121

cooler 122

signal detection part 130

optical sensor 131

controller 140

communication part CP

FIG. 11

FIG. 12

FIG. 13

170    160

FIG. 14

191

| analysis system  200 |
|---|
| analysis device 210 |
| detection chip 220 |

FIG. 15

moving the loading part holding the detection chip to the temperature control part — S320

adjusting a temperature of the detection chip by the heater and the cooler — S340

moving the loading part holding the detection chip to the signal detection part, and acquiring light from the detection chip by the optical sensor — S360

analyzing the light from the detection chip to obtain analysis result — S380

FIG. 16

1111 — 190

FIG. 17A

FIG. 17B

FIG. 17C

FIG. 18

FIG. 19

| | |
|---|---|
| converting the optical image to a grayscale image | S3802 |
| identifying a reaction chamber of the detection chip in the grayscale image | S3804 |
| determining a spaced line in the grayscale image according to an identified reaction chamber | S3806 |
| dividing the grayscale image to obtain a plurality of chamber image blocks according to the spaced line | S3808 |
| determining a chamber image block with a pixel mean square error greater than a preset threshold in the plurality of chamber image blocks as a target image block | S3810 |

FIG. 20

FIG. 21A

FIG. 21B

FIG. 22A

FIG. 22B

FIG. 23

## INTERNATIONAL SEARCH REPORT

International application No.

**PCT/CN2021/080428**

### A. CLASSIFICATION OF SUBJECT MATTER

C12M 1/00(2006.01)i; C12M 1/42(2006.01)i; C12M 1/36(2006.01)i

According to International Patent Classification (IPC) or to both national classification and IPC

### B. FIELDS SEARCHED

Minimum documentation searched (classification system followed by classification symbols)

C12M

Documentation searched other than minimum documentation to the extent that such documents are included in the fields searched

Electronic data base consulted during the international search (name of data base and, where practicable, search terms used)

CNABS; CNMED; CNKI; CNTXT; 百度学术和检索词: 检测, 芯片, 装载, 控制, 温度, 传感器, 聚合酶链式反应, 加热, 冷却等; DWPI; SIPOABS; EPTXT; USTXT; WOTXT; JPTXT; PUBMED; ISI WEB OF SCIENCE和检索词: detect+, chip?, load +, control+, temperature, transducer?, sensor?, PCR, polymerase chain reaction, heat+, cool+等

### C. DOCUMENTS CONSIDERED TO BE RELEVANT

| Category* | Citation of document, with indication, where appropriate, of the relevant passages | Relevant to claim No. |
|---|---|---|
| X | CN 110951610 A (SUZHOU DIYIN'AN BIOLOGICAL TECHNOLOGY CO., LTD.) 03 April 2020 (2020-04-03)<br>see description, paragraphs [0133]-[0163], figures 1-11 | 1, 8, 11-13, 17-18 |
| Y | CN 110951610 A (SUZHOU DIYIN'AN BIOLOGICAL TECHNOLOGY CO., LTD.) 03 April 2020 (2020-04-03)<br>see description, paragraphs [0133]-[0163], figures 1-11 | 2-7, 9-10, 14-16, 19-20 |
| Y | CN 209974747 U (BEIJING BOE TECHNOLOGY DEVELOPMENT CO., LTD. et al.) 21 January 2020 (2020-01-21)<br>see description, paragraphs [0039]-[0076], figures 1-10 | 2-7, 9-10, 14-16, 19-20 |
| PX | CN 212560194 U (BOE TECHNOLOGY GROUP CO., LTD.) 19 February 2021 (2021-02-19)<br>see claims 1-17 and description, specific embodiments | 1-20 |
| A | CN 103096810 A (MATSUSHITA ELECTRIC INDUSTRY CO., LTD.) 08 May 2013 (2013-05-08)<br>see description, specific embodiments | 1-20 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 May 2021** | **26 May 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/080428** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 108291923 A (SYSMEX CORPRATION) 17 July 2018 (2018-07-17) see description, specific embodiments | 1-20 |

Form PCT/ISA/210 (second sheet) (January 2015)

## INTERNATIONAL SEARCH REPORT
### Information on patent family members

| International application No. |
| --- |
| **PCT/CN2021/080428** |

| Patent document cited in search report | | | Publication date (day/month/year) | Patent family member(s) | | | Publication date (day/month/year) |
| --- | --- | --- | --- | --- | --- | --- | --- |
| CN | 110951610 | A | 03 April 2020 | None | | | |
| CN | 209974747 | U | 21 January 2020 | WO | 2020207295 | A1 | 15 October 2020 |
| CN | 212560194 | U | 19 February 2021 | None | | | |
| CN | 103096810 | A | 08 May 2013 | US | 2013172741 | A1 | 04 July 2013 |
| | | | | JP | WO2013008447 | A1 | 23 February 2015 |
| | | | | WO | 2013008447 | A1 | 17 January 2013 |
| CN | 108291923 | A | 17 July 2018 | JP | 6581483 | B2 | 25 September 2019 |
| | | | | EP | 3382398 | A4 | 07 August 2019 |
| | | | | US | 2018259545 | A1 | 13 September 2018 |
| | | | | EP | 3382398 | A1 | 03 October 2018 |
| | | | | JP | 2017096895 | A | 01 June 2017 |
| | | | | WO | 2017090780 | A1 | 01 June 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010367897